# FASCICULE DE BREVET EUROPEEN

(11) **EP 3 180 230 B1**
(45) Date de publication et mention de la délivrance du brevet: **12.09.2018**
(21) Numéro de dépôt: 15748292.8
(22) Date de dépôt: 15.07.2015
(51) Int. Cl.: B62D 5/06

(54) **STRUCTURE PERMETTANT DE FIXER DES COMPOSANTS SUR LE BERCEAU MOTEUR SANS PROLONGES D'UN VEHICULE**
STRUKTUR ZUR BEFESTIGUNG VON BAUELEMENTEN AUF EINEM MOTORTRÄGER OHNE FAHRZEUGRAHMENERWEITERUNGEN
STRUCTURE FOR ATTACHING COMPONENTS ONTO AN ENGINE CRADLE WITHOUT VEHICLE FRAME EXTENSIONS

(30) Priorité: 13.08.2014 FR 1457787
(43) Date de publication de la demande: 21.06.2017
(73) Titulaire: PSA Automobiles SA, 78300 Poissy (FR)
(72) Inventeur: TALLET, Frederic, F-70200 Moffans et Vacheresse (FR); CASTREC, Joel, F-91340 Ollainville (FR)
(74) Mandataire: Rosenberg, Muriel Sylvie
(86) Numéro de dépôt international: PCT/FR2015/051934
(87) Numéro de publication internationale: WO 2016/024052

(56) Documents cités:
- WO-A1-2012/101357
- DE-A1- 19 739 951
- JP-A- 2004 082 874

## Description

La présente invention concerne une structure permettant de fixer des composants mécaniques, fluidiques, électriques ou électromécaniques sur le berceau moteur d'un véhicule, en particulier d'un véhicule automobile, dans lequel les prolonges du berceau moteur, qui reçoivent les interfaces de support desdits composants, ont été supprimées.

De façon classique, dans un véhicule automobile, la structure avant de caisse peut présenter une voie basse de transmission d'effort obtenue par l'adoption d'un berceau long constitué d'un berceau moteur standard auquel ont été rajoutées des prolonges de berceau.

De façon classique également, divers composants de la structure avant du véhicule peuvent être placés, totalement ou partiellement, sur ces prolonges de berceau, notamment les canalisations fluidiques du système de direction assistée du véhicule et éventuellement les capteurs de hauteur de caisse - dits aussi « capteurs de correction d'assiette » - placés également sur les triangles de suspension de droite et de gauche, lesquels capteurs sont destinés, par exemple, à indiquer que le chargement maximal du véhicule est atteint par l'allumage d'un voyant situé à l'arrière du véhicule.

Lorsque le véhicule est un véhicule à structure de train avant sans prolonges du berceau moteur, le support de fixation des canalisations de la direction assistée du véhicule mentionnées ci-dessus disparaît, comme le support de fixation des éventuels capteurs de hauteur de caisse prévus sur certaines versions du véhicule.

Il y a par conséquent nécessité, sur des véhicules à berceau moteur sans prolonges, de « recréer » les interfaces de fixation disparues du fait même de la suppression des prolonges de berceau.

On a déjà recherché des solutions techniques pour supporter, par exemple, des capteurs de hauteur de caisse sur la structure avant d'un véhicule automobile.

Ainsi, on connaît, selon le document JP 4079725 B2, une structure de montage de capteur de hauteur de caisse d'un véhicule automobile. Elle comporte un étrier support qui permet le montage du corps principal du capteur sur un tronçon de paroi verticale. L'étrier support comporte un tronçon de surface vertical qui couvre une surface externe du corps principal de capteur, un tronçon de surface supérieur qui couvre une partie supérieure du corps principal de capteur, et un tronçon de surface inférieur qui couvre une partie inférieure du corps principal de capteur. Le corps principal de capteur est incliné et fixé au tronçon de surface vertical, et les tronçons de surface, supérieur et inférieur, sont montés sur le tronçon de paroi verticale de la traverse de suspension. De plus, l'étrier support comporte son propre guide de faisceau du capteur de hauteur.

Toutefois, cet étrier support et les autres supports de capteurs connus de l'art antérieur ne permettent pas de palier à l'absence des prolonges du berceau moteur de la structure avant de différents véhicules.

Le but de la présente invention est de fournir une structure permettant de fixer des composants, tels que ceux mentionnés précédemment, sur le berceau moteur sans prolonges d'un véhicule, en particulier d'un véhicule automobile, et plus particulièrement d'un véhicule automobile utilitaire.

Un autre but de la présente invention est de fournir une telle structure de fixation de composants, qui soit adaptée à la fixation sur un berceau sans prolonges des canalisations de la direction assistée du véhicule et à la fixation partielle, sur ce même berceau sans prolonges, de capteurs, tels que des capteurs de hauteur de caisse ou de correction d'assiette.

C'est également un but de la présente invention de fournir une telle structure de fixation de composants, qui respecte l'environnement mécanique du berceau moteur, qui respecte les contraintes de montage de cet environnement, et qui permette de respecter, ainsi, les différents cahiers des charges de montage en construction automobile.

Enfin, c'est aussi un but de la présente invention de fournir une telle structure de fixation de composants, qui soit de conception, de fabrication, de montage et de fixation simples, qui soit robuste, fiable et économique.

Pour parvenir à ces buts, la présente invention a pour objet une structure permettant de fixer des composants sur un véhicule à berceau moteur sans prolonges, et cette structure, nouvelle, est constituée d'un profilé, rigide, sensiblement en forme générale d'équerre, qui comporte une interface de fixation du profilé sur le berceau moteur, une première interface de fixation et une seconde interface de fixation pour fixer respectivement un premier et, éventuellement, un second composant, les deux composants étant prévus respectivement dans le voisinage de l'extrémité de l'une et de l'autre des deux branches de l'équerre formant le profilé.

Selon un mode préféré de réalisation de l'invention, la première interface de fixation de composant est une interface de fixation des canalisations de la direction assistée du véhicule, laquelle première interface de fixation est située dans le voisinage de l'extrémité de la branche de l'équerre qui est dirigée sensiblement selon la direction longitudinale du véhicule.

Selon un mode préféré de réalisation de l'invention également, la seconde interface de fixation de composant est une interface de fixation d'un capteur de hauteur de caisse du véhicule, laquelle seconde interface de fixation est située dans le voisinage de l'extrémité de la branche de l'équerre qui est dirigée sensiblement perpendiculairement à la direction longitudinale du véhicule et sensiblement parallèlement à la direction longitudinale du triangle de suspension du véhicule.

De manière préférentielle, l'interface de fixation du profilé sur le berceau moteur est située sur un prolongement de la branche de l'équerre dirigée sensiblement selon la direction longitudinale du véhicule.

De manière préférentielle également, le moyen de fixation propre à l'interface de fixation du profilé sur le berceau moteur est constitué, d'une part, par une vis de fixation, et d'autre part, par une patte ou doigt anti-rotation qui est destiné à venir s'insérer dans un trou boutonnière de la coque du berceau moteur.

Le moyen de fixation propre à l'interface de fixation des canalisations de la direction assistée du véhicule peut avantageusement être constitué par un rebord sensiblement vertical du profilé et une vis de fixation desdites canalisations sur ledit rebord du profilé.

Ce moyen de fixation propre à l'interface de fixation des canalisations de la direction assistée du véhicule peut avantageusement comporter également un doigt anti-rotation qui coopère par concordance des formes avec une encoche prévue dans le rebord sensiblement vertical du profilé.

Le moyen de fixation propre à l'interface de fixation d'un capteur de hauteur de caisse du véhicule peut avantageusement être constitué par deux vis de fixation destinées au vissage dudit capteur de hauteur de caisse sur le profilé.

De préférence, le profilé peut être réalisé en tôle métallique, en tôle d'acier par exemple.

La présente invention a aussi pour objet un véhicule, en particulier un véhicule automobile, de type à berceau moteur sans prolonges de berceau, qui comporte une structure de fixation de composants qui est conforme à celle décrite ci-dessus dans ses grandes lignes.

D'autres buts, avantages et caractéristiques de l'invention apparaîtront dans la description qui suit d'un exemple de réalisation, non limitatif de l'objet et de la portée de la présente demande de brevet, accompagnée de dessins dans lesquels :
- la figure 1 est une vue en perspective, schématique, partielle, d'un berceau moteur de train avant de véhicule automobile, le berceau étant pourvu de prolonges de berceau (seule est représentée la prolonge de berceau de gauche et la partie de gauche du berceau),
- la figure 2 est une vue en perspective, schématique, partielle, du berceau moteur de train avant de véhicule automobile de la figure 1, dans laquelle le berceau moteur n'est plus pourvu de prolonges,
- la figure 3 est une vue en perspective, schématique, de la partie de berceau moteur de la figure 2, sur laquelle est montée la structure de fixation de composants qui fait l'objet de la présente invention, et
- la figure 4 est vue en perspective, schématique, agrandie de la structure de fixation de composants de la figure 3 qui fait l'objet de la présente invention.

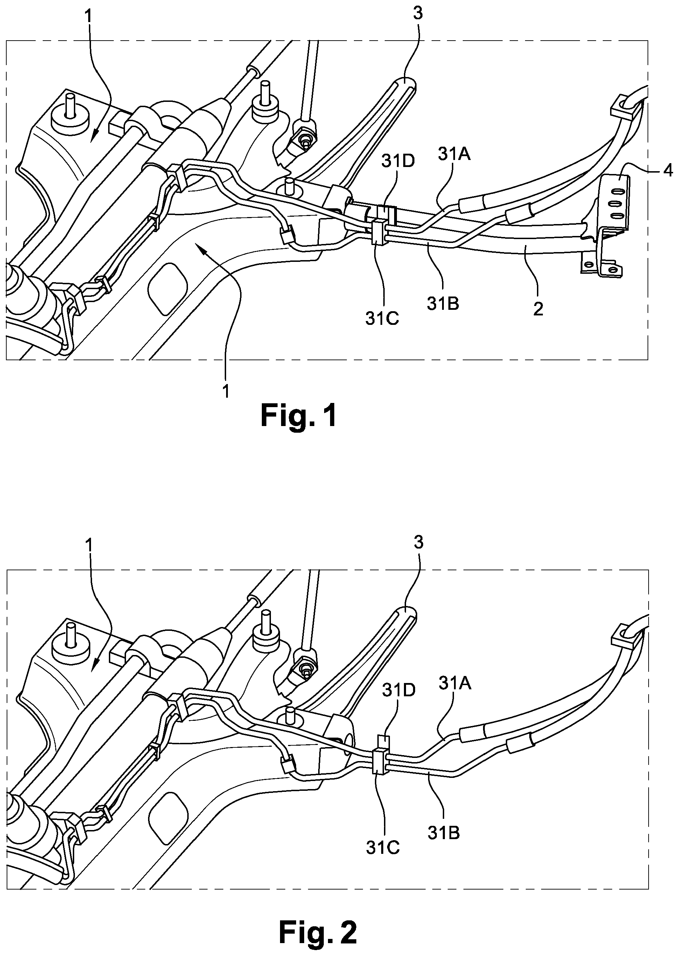

En référence au dessin de la figure 1, on a représenté une partie d'un ensemble structurel avant de véhicule automobile, qui comporte notamment un berceau 1 de caisse automobile et des prolonges de berceau, dont une est représentée et désignée par la référence 2.

Le berceau 1 est, par exemple, un berceau moteur. Il s'étend sensiblement horizontalement sous les longerons principaux de la caisse du véhicule. Il supporte au moins en partie les suspensions (représentées par le triangle de suspension 3) des roues avant du véhicule, ainsi que le moteur (non représenté). Il sert également de fixation aux bras de suspension et/ou à la barre antiroulis.

Les prolonges de berceau sont en matériau composite, en matière plastique ou bien en aluminium et relient les extrémités droite et gauche de la poutre transversale ou poutre de pare-chocs de voie basse 4 au berceau 1.

Sur le dessin de la figure 1, on a représenté la prolonge de berceau gauche (référence 2), qui relie l'extrémité gauche de la poutre 4 au berceau 1. Le terme « gauche » s'entend par rapport aux orientations habituelles et au sens de marche normal du véhicule. Les prolonges de berceau droite et gauche sont analogues et symétriques par rapport à un plan longitudinal vertical médian du véhicule. Elles sont monobloc, nervurées, pourvues d'embase, et présentent la forme d'un corps allongé suivant une direction d'extension proche de l'axe longitudinal du véhicule.

Comme montré sur la figure 1, les deux canalisations, référencées 31A et 31B, qui sont des canalisations de la direction assistée du véhicule, sont fixées sur la prolonge de berceau 2 par l'intermédiaire d'une agrafe de maintien 31C et d'une patte de fixation 31D solidaire de l'agrafe 31C et rigidement fixée sur le corps allongé de la prolonge de berceau 2. Ces canalisations 31A, 31B alimentent, de façon classique, la crémaillère de direction assistée du véhicule.

Il importe de noter que l'ensemble structurel avant de véhicule peut être décliné en deux versions différentes, à savoir une version sans prolonges de berceau, qui correspond à une application de véhicule utilitaire, et une version avec les prolonges de berceau, qui correspond à une application de véhicule personnel.

Dans la version sans prolonges de berceau, illustrée par le dessin de la figure 2, le point de fixation des canalisations de direction assistée 31A et 31B a disparu et les interfaces de fixation de ces dernières, c'est-à-dire l'agrafe de maintien 31C et la patte de fixation 31D, sont « dans le vide ».

On notera également que dans la version sans prolonges de berceau correspondant aux applications de véhicules utilitaires, il peut être requis de placer sur chacun des triangles de suspension 3 un capteur d'assiette ou de hauteur de caisse du véhicule (non représenté sur les dessins des figures 1 et 2), et l'intégration de ce capteur nécessite aussi un point de fixation que l'absence de prolonges de berceau rend difficile à créer.

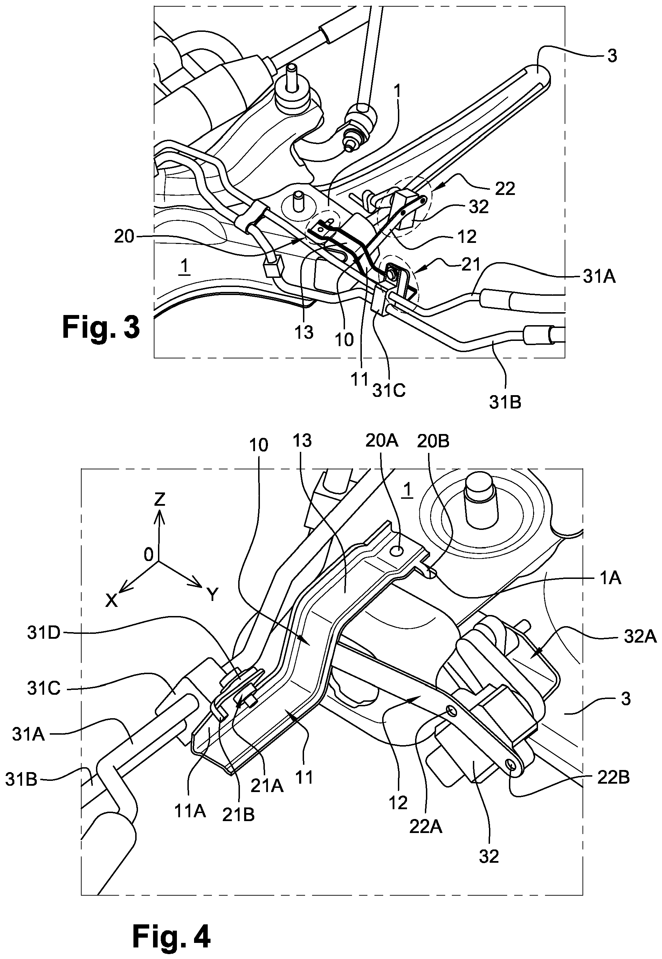

Selon le principe même de la présente invention et en référence au dessin de la figure 3, on parvient à « recréer » les points de fixation manquants des canalisations de la direction assistée et des capteurs de hauteur de caisse, qui, du fait même de l'absence des prolonges de berceau des véhicules utilitaires, avaient disparus. Pour parvenir à « recréer » ces points de fixation, il est prévu, à droite comme à gauche du berceau 1, une structure de fixation qui est constituée d'un profilé, de référence générale 10, rigide, réalisé de préférence en tôle d'acier, sensiblement en forme générale d'équerre, qui comporte, d'une part, une interface de fixation, de référence générale 20, pour la fixation du profilé 10 sur le berceau moteur 1, et d'autre part, deux autres interfaces de fixation, de références générales 21 et 22 respectivement, pour permettre la fixation respectivement des canalisations 31A et 31B de la direction assistée du véhicule (interface de fixation 21) et d'un capteur de hauteur de caisse 32 (interface de fixation 22).

Les deux branches dirigées sensiblement à 90° d'angle pour réaliser la forme en équerre du profilé 10 sont désignées par les références 11 et 12, la branche 11 recevant l'interface de fixation 21 des canalisations 31A et 31B de la direction assistée du véhicule et la branche 12 recevant l'interface de fixation 22 d'un capteur de hauteur de caisse 32.

En référence également au dessin de la figure 4, l'interface de fixation 20 du profilé 10 sur le berceau moteur 1 est portée par un prolongement 13 de la branche 11 de la forme en équerre, et le moyen de fixation propre à cette interface est constitué, d'une part, par une vis de fixation (non représentée) destinée à traverser l'orifice 20A du profilé 10 sur le berceau 1, et d'autre part, par une patte anti-rotation 20B destinée à s'insérer dans un trou boutonnière 1A de la coque du berceau 1 pour immobiliser angulairement le profilé 10 en position rigidement fixée sur le berceau 1.

Le moyen de fixation propre à l'interface de fixation 21 des canalisations 31A et 31B de la direction assistée du véhicule est constitué par un rebord 11A (figure 4) sensiblement vertical de la branche 11 du profilé 10 et une vis de fixation 21A des canalisations 31A, 31B sur ledit rebord 11A. Plus précisément, cette vis de fixation 21A vient fixer la patte de fixation 31D et l'agrafe de maintien 31C des canalisations 31A, 31B sur le rebord 11A du profilé 10.

Ce rebord 11A sensiblement vertical permet de déporter légèrement la zone de montage et de diminuer, ainsi, l'agressivité de l'environnement (risques de coupure, par exemple) de l'interface de fixation 21 pour l'opérateur de montage.

En référence encore au dessin de la figure 4, le moyen de fixation propre à l'interface de fixation 22 d'un capteur de hauteur de caisse 32 est constitué par deux vis de fixation représentées seulement par leurs orifices 22A, 22B de passage dans la branche 12 du profilé 10.

On notera que l'épaisseur et la section du profilé 10 (sensiblement en forme de petit « ω ») constitutif de la structure de l'invention sont prédéterminés de façon à répondre à une contrainte de résistance suffisante.

La structure permettant de fixer des composants sur un berceau moteur sans prolonges, décrite ci-dessus, présente de nombreux avantages, parmi lesquels les avantages suivants :
- elle respecte les contraintes de montage et présente une rigidité suffisante pour respecter les différents cahiers des charges de montage des véhicules,
- elle permet de garantir une position et une tenue correctes des canalisations de la direction assistée du véhicule, ainsi que des capteurs de correction d'assiette,
- elle respecte l'environnement du berceau moteur et des triangles de suspension,
- elle est de conception, de fabrication, de montage et de fixation simples,
- elle est robuste, fiable et économique.

## Revendications

1. Structure permettant de fixer des composants sur le berceau moteur (1) sans prolonges d'un véhicule, **caractérisée en ce qu'**elle est constituée d'un profilé (10), rigide, sensiblement en forme générale d'équerre, qui comporte une interface de fixation (20) du profilé (10) sur le berceau moteur (1), une première interface de fixation (21) et une seconde interface de fixation (22) pour fixer respectivement un premier et un second composant prévus respectivement dans le voisinage de l'extrémité de l'une et de l'autre des deux branches (11, 12) de l'équerre formant le profilé (10).

2. Structure selon la revendication 1, **caractérisée en ce que** la première interface de fixation (21) de composant est une interface de fixation des canalisations (31A, 31B) de la direction assistée du véhicule, laquelle première interface de fixation (21) est située dans le voisinage de l'extrémité de la branche (11) de l'équerre dirigée sensiblement selon la direction longitudinale (« X ») du véhicule.

3. Structure selon l'une quelconque des revendications 1 et 2, **caractérisée en ce que** la seconde interface de fixation (22) de composant est une interface de fixation d'un capteur de hauteur de caisse (32), laquelle seconde interface de fixation (22) est située dans le voisinage de l'extrémité de la branche (12) de l'équerre dirigée sensiblement perpendiculairement à la direction longitudinale (« X ») du véhicule et sensiblement parallèlement à la direction longitudinale du triangle de suspension (3) du véhicule.

4. Structure selon l'une quelconque des revendications 1 à 3, **caractérisée en ce que** l'interface de fixation (20) du profilé (10) sur le berceau moteur (1) est située sur un prolongement (13) de la branche (11) de l'équerre dirigée sensiblement selon la direction longitudinale (« X ») du véhicule.

5. Structure selon la revendication 4, **caractérisée en ce que** le moyen de fixation propre à l'interface de fixation (20) du profilé (10) sur le berceau moteur (1) est constitué par une vis de fixation (20A) et par une patte anti-rotation (20B).

6. Structure selon la revendication 2, **caractérisée en ce que** le moyen de fixation propre à l'interface de fixation (21) des canalisations (31A, 31B) de la direction assistée du véhicule est constitué par un rebord (11A) sensiblement vertical du profilé (10) et une vis de fixation desdites canalisations (31A, 31B) sur ledit rebord (11A).

7. Structure selon la revendication 3, **caractérisée en ce que** le moyen de fixation propre à l'interface de fixation (22) d'un capteur de hauteur de caisse (32) est constitué par deux vis de fixation (22A, 22B) destinées au vissage dudit capteur de hauteur de caisse (32) sur le profilé (10).

8. Structure selon la revendication 6, **caractérisée en ce que** ledit moyen de fixation propre à l'interface de fixation (21) des canalisations (31A, 31B) de la direction assistée du véhicule comporte également un doigt anti-rotation (21B) qui coopère par concordance des formes avec une encoche prévue dans le rebord (11A) du profilé (10).

9. Structure selon l'une quelconque des revendications 1 à 8, **caractérisée en ce que** le profilé (10) est réalisé en tôle, de préférence en tôle d'acier.

10. Véhicule, en particulier véhicule automobile, de type à berceau moteur (1) sans prolonges de berceau, **caractérisé en ce qu'**il comporte une structure (10) permettant de fixer des composants sur le berceau moteur (1), laquelle structure est conforme à l'une quelconque des revendications précédentes.

## Patentansprüche

1. Struktur, die es erlaubt, Bauelemente auf dem Motorträger (1) ohne Fahrzeugrahmenerweiterungen zu befestigen, **dadurch gekennzeichnet, dass** sie aus einem starren Profil (10) mit allgemeiner Winkelform besteht, das eine Befestigungsschnittfläche (20) des Profils (10) auf dem Motorträger (1), eine erste Befestigungsschnittfläche (21) und eine zweite Befestigungsschnittfläche (22) zum jeweiligen Befestigen eines ersten und eines zweiten Bauelements, die jeweils in der Nähe des Endes des einen oder des anderen der zwei Schenkel (11, 12) des Winkels, der das Profil (10) bildet, vorgesehen ist, umfasst.

2. Struktur nach Anspruch 1, **dadurch gekennzeichnet, dass** die erste Befestigungsschnittfläche (21) eines Bauelements eine Befestigungsschnittfläche der Kanalisationen (31A, 31B) der Servolenkung des Fahrzeugs ist, wobei die erste Befestigungsschnittfläche (21) benachbart zu dem Ende des Schenkel (11) des Winkelstücks, das im Wesentlichen entlang der Längsrichtung ("X") des Fahrzeugs gerichtet ist, liegt.

3. Struktur nach einem der Ansprüche 1 und 2, **dadurch gekennzeichnet, dass** die zweite Befestigungsschnittfläche (22) eines Bauelements eine Befestigungsschnittfläche eines Karosseriehöhensensors (32) ist, wobei die zweite Befestigungsschnittfläche (22) benachbart zu dem Ende des Schenkels (12) des Winkelstücks liegt, das im Wesentlichen senkrecht zu der Längsrichtung ("X") des Fahrzeugs und im Wesentlichen parallel zu der Längsrichtung des Dreiecksquerlenkers (3) gerichtet ist.

4. Struktur nach einem der Ansprüche 1 bis 3, **dadurch gekennzeichnet, dass** die Befestigungsschnittfläche (20) des Profils (10) auf dem Motorträger (1) auf einer Verlängerung (13) des Schenkels (11) des Winkelstücks, die im Wesentlichen entlang der Längsrichtung ("X") des Fahrzeugs gerichtet ist, liegt.

5. Struktur nach Anspruch 4, **dadurch gekennzeichnet, dass** das Befestigungsmittel, das der Befestigungsschnittfläche (20) des Profils (10) auf dem Motorträger (1) eigen ist, aus einer Befestigungsschraube (20A) und aus einer Drehschutzpratze (20B) besteht.

6. Struktur nach Anspruch 2, **dadurch gekennzeichnet, dass** das Befestigungsmittel, das der Befestigungsschnittfläche (21) eigen ist, der Kanalisationen (31A, 31B) der Servolenkung des Fahrzeugs aus einer Krempe (11A), die im Wesentlichen vertikal ist, des Profils (10) und einer Befestigungsschraube der Kanalisationen (31A, 31B) des Rands (11A) besteht.

7. Struktur nach Anspruch 3, **dadurch gekennzeichnet, dass** das Befestigungsmittel, das der Befestigungsschnittfläche (22) eines Karosseriehöhensensors (32) eigen ist, aus zwei Befestigungsschrauben (22A, 22B) besteht, die für das Schrauben des Karosseriehöhensensors (32) auf das Profil (10) bestimmt sind.

8. Struktur nach Anspruch 6, **dadurch gekennzeichnet, dass** das Befestigungsmittel, das der Befestigungsschnittfläche (21) der Kanalisationen (31A, 31B) der Servolenkung des Fahrzeugs eigen ist, auch einen Rotationsschutzfinger (21B) umfasst, der in Übereinstimmung der Formen mit einer Kerbe, die in der Krempe (11A) des Profils (10) vorgesehen ist, zusammenwirkt.

9. Struktur nach einem der Ansprüche 1 bis 18, **dadurch gekennzeichnet, dass** das Profil (10) aus Blech, bevorzugt aus Stahlblech, besteht.

10. Fahrzeug, insbesondere Kraftfahrzeug vom Typ mit Motorträger (1) ohne Fahrzeugrahmenerweiterungen, **dadurch gekennzeichnet, dass** es eine Struktur (10) umfasst, die es erlaubt, Bauelemente auf dem Motorträger (1) zu befestigen, wobei die Struktur einem beliebigen der vorhergehenden Ansprüche entspricht.

## Claims

1. A structure for attaching components onto an engine cradle (1) without vehicle frame extensions, **characterized in that** it is constituted by a rigid profile (10), substantially in the general form of a bracket, which comprises an attachment interface (20) of the profile (10) onto the engine cradle (1), a first attachment interface (21) and a second attachment interface (22) for attaching, respectively, a first and a second component provided respectively in the vicinity of the end of one and the other of the two branches (11, 12) of the bracket forming the profile (10).

2. The structure according to Claim 1, **characterized in that** the first component attachment interface (21) is an attachment interface of the ducts (31A, 31B) of the power steering of the vehicle, which first attachment interface (21) is situated in the vicinity of the end of the branch (11) of the bracket directed substantially along the longitudinal direction ("X") of the vehicle.

3. The structure according to any one of Claims 1 and 2, **characterized in that** the second component attachment interface (22) is an attachment interface of a body height sensor (32), which second attachment interface (22) is situated in the vicinity of the end of the branch (12) of the bracket directed substantially perpendicularly to the longitudinal direction ("X") of the vehicle and substantially parallel to the longitudinal direction of the suspension wishbone (3) of the vehicle.

4. The structure according to any one of Claims 1 to 3, **characterized in that** the attachment interface (20) of the profile (10) onto the engine cradle (1) is situated on an extension (13) of the branch (11) of the bracket directed substantially along the longitudinal direction ("X") of the vehicle.

5. The structure according to Claim 4, **characterized in that** the attachment means belonging to the attachment interface (20) of the profile (10) onto the engine cradle (1) is constituted by an attachment screw (20A) and by an anti-rotation lug (20B).

6. The structure according to Claim 2, **characterized in that** the attachment means belonging to the attachment interface (21) of the ducts (31A, 31B) of the power steering of the vehicle is constituted by a substantially vertical edge (11A) of the profile (10) and an attachment screw of said ducts (31A, 31B) on said edge (11A).

7. The structure according to Claim 3, **characterized in that** the attachment means belonging to the attachment interface (22) of a body height sensor (32) is constituted by two attachment screws (22A, 22B) intended for the screwing of said body height sensor (32) on the profile (10).

8. The structure according to Claim 6, **characterized in that** said attachment means belonging to the attachment interface (21) of the ducts (31A, 31B) of the power steering of the vehicle also comprises an anti-rotation pin (21B) which cooperates by match of the shapes with a notch provided in the edge (11A) of the profile (10).

9. The structure according to any one of Claims 1 to 8, **characterized in that** the profile (10) is made of sheet metal, preferably of sheet steel.

10. A vehicle, in particular a motor vehicle, of the engine cradle (1) type, without cradle extensions, **characterized in that** it comprises a structure (10) permitting components to be attached onto the engine cradle (1), which structure is in accordance with any one of the preceding claims.
